# EUROPEAN PATENT SPECIFICATION

(11) **EP 4 563 529 B1**
(45) Date of publication and mention of the grant of the patent: **07.10.2026**
(21) Application number: 24209176.7
(22) Date of filing: 28.10.2024
(51) Int. Cl.: C01C 3/12, B01J 19/18

(54) **METHOD OF PREPARING PRUSSIAN BLUE POSITIVE ELECTRODE MATERIAL FOR SODIUM BATTERY USING TAYLOR REACTOR**
VERFAHREN ZUR HERSTELLUNG VON PREUSSISCHBLAUEM POSITIVELEKTRODENMATERIAL FÜR NATRIUMBATTERIEN MIT TAYLORREAKTOR
PROCÉDÉ DE PRÉPARATION D'UN MATÉRIAU D'ÉLECTRODE POSITIVE BLEU DE PRUSSE POUR BATTERIE AU SODIUM À L'AIDE D'UN RÉACTEUR DE TAYLOR

(30) Priority: 28.11.2023 KR 20230168570
(43) Date of publication of application: 04.06.2025
(73) Proprietor: Laminar Co., Ltd, Seongnam-si, Gyeonggi-do 13219 (KR)
(72) Inventor: HONG, Jong Pal, 13219 Seongnam-si, Gyeonggi-do, (KR); CHOI, Gyeong Rye, 13219 Seongnam-si, Gyeonggi-do, (KR); KIM, Su Jin, 13219 Seongnam-si, Gyeonggi-do, (KR)
(74) Representative: Viering, Jentschura & Partner mbB Patent- und Rechtsanwälte

(56) References cited:
- CN-A- 116 470 042
- GB-A- 1 438 064
- US-A1- 2006 062 702

## Description

### [Technical Field]

The present invention relates to a method of preparing a Prussian blue positive electrode material for a sodium battery using a Taylor reactor, and a method of preparing a Prussian blue positive electrode material for a sodium battery using a Taylor reactor which exhibits excellent Prussian blue positive electrode material production efficiency and provides a Prussian blue positive electrode material that can provide a sodium battery with improved charge/discharge efficiency and an improved capacity retention rate.

### [Background Art]

Recently, the demand for secondary cells as a power source for personal mobile devices such as mobile phones and tablet PCs, or machines such as hybrid electric vehicles and plug-in electric vehicles is increasing significantly.

In the past, although lithium secondary batteries were most commonly used as power supply devices for machines such as personal mobile terminals or electric vehicles, since lithium secondary cells use a lot of rare metals such as cobalt (Co), nickel (Ni), manganese (Mn), and lithium (Li), there was a problem of inadequate supply of rare metals due to the increased demand for large-scale secondary batteries.

In order to solve the above problems and lower the production costs of secondary batteries, development is underway on sodium secondary batteries, which are about one-sixth the cost of a lithium secondary battery, and sodium secondary batteries may be composed of materials that are abundant and inexpensive, and the commercialization of these materials is expected to enable a massive supply of secondary batteries.

A sodium secondary battery is a secondary battery consisting of a positive electrode and a negative electrode, which include a positive electrode active material and a negative electrode active material capable of charging and discharging sodium (Na) ions, respectively, and an electrolyte containing sodium ions. Like lithium ions in a lithium secondary battery, the sodium secondary battery is charged and discharged as sodium ions move back and forth between the negative electrode and the positive electrode via an electrolyte. The doping of sodium ions into the negative electrode active material corresponds to charging, and the release of sodium ions from the negative electrode active material corresponds to discharging.

Recently, an attempt has been made to apply Prussian blue, which exhibits an excellent cycle life, low cost, and high rate, as a positive electrode active material of the sodium secondary battery, and a method using a stirring tank is utilized in the conventional process of preparing Prussian blue.

However, the conventional preparation method using a stirring tank had problems that the productivity of Prussian blue was low, and the charge/discharge effect and capacity retention rate of the prepared Prussian blue were low.

### [Related Art Documents]

### [Patent Documents]

(Patent Document 1) Korean Patent No. 10-2266574 (June 14, 2021)
(Patent Document 2) Korean Patent No. 10-2406480 (June 02, 2022)

### [Disclosure]

### [Technical Problem]

The present invention is directed to providing a method of preparing a Prussian blue positive electrode material for a sodium battery using a Taylor reactor which can exhibit excellent Prussian blue positive electrode material production efficiency and can provide a Prussian blue positive electrode material that provides a sodium battery with improved charge/discharge efficiency and an improved capacity retention rate.

### [Technical Solution]

One aspect of the present invention provides a method of preparing a Prussian blue positive electrode material for a sodium battery using a Taylor reactor, which includes a first mixture preparation step for preparing a first mixture in which an aqueous solution of iron chloride is mixed, a second mixture preparation step for preparing a second mixture in which an aqueous solution of sodium ferrocyanide is mixed, a synthesis step for synthesizing a Prussian blue analog by reacting the mixture prepared in the second mixture preparation step with the mixture prepared in the first mixture preparation step in a Taylor reactor under a nitrogen injection condition, a maturation step for maturing the Prussian blue analog synthesized in the synthesis step, a washing and filtering step for washing and filtering the Prussian blue analog matured through the maturation step using a washing agent, and a drying step for drying the Prussian blue analog washed and filtered through the washing and filtering step.

According to an exemplary embodiment of the present invention, the first mixture preparation step is performed by mixing a 0.001 to 6M aqueous solution of iron chloride containing distilled water purged with nitrogen with 0.001 to 4M trisodium citrate.

According to another exemplary embodiment of the present invention, the second mixture preparation step is performed by mixing a 0.001 to 1M aqueous solution of sodium ferrocyanide containing distilled water purged with nitrogen with 0.001 to 4M trisodium citrate.

According to still another exemplary embodiment of the present invention, the synthesis step is performed by inputting 100 parts by weight of the mixture prepared in the first mixture preparation step and 80 to 120 parts by weight of the mixture prepared in the second mixture preparation step in to a Taylor reactor and stirring the resulting mixture at 10 to 100 °C and a speed of 50 to 1500 rpm for 1 to 1440 minutes.

According to yet another exemplary embodiment of the present invention, the drying step is performed at 40 to 130 °C for 10 to 30 hours.

### [Advantageous Effects]

A method of preparing a Prussian blue positive electrode material for a sodium battery using a Taylor reactor according to the present invention exhibits excellent Prussian blue positive electrode material production efficiency and exhibits an excellent effect of providing a Prussian blue positive electrode material which can be used to produce a sodium battery with improved charge/discharge efficiency and an improved capacity retention rate.

### [Description of Drawings]

FIG. 1 is a flow chart illustrating a method of preparing a Prussian blue positive electrode material for a sodium battery using a Taylor reactor according to the present invention.
FIG. 2 is a schematic diagram showing the reaction process of a Prussian blue analog in the synthesis step of the present invention.
FIG. 3 is a set of photographs of the Prussian blue positive electrode materials prepared in Examples 1 to 4 of the present invention, photographed by SEM.
FIG. 4 is a set of photographs of the Prussian blue positive electrode materials prepared in Comparative Examples 1 to 4 of the present invention, photographed by SEM.
FIGS. 5 to 8 are graphs showing the XRD patterns of the Prussian blue positive electrode materials prepared in Examples 1 to 4 and Comparative Examples 1 to 4 of the present invention.
FIG. 9 is a set of graphs showing the charge/discharge capacities of the Prussian blue positive electrode materials prepared in Examples 1, 3 and 4 and Comparative Examples 1 to 3 of the present invention.
FIG. 10 is a set of graphs showing the results of a charge/discharge capacity test of the Prussian blue positive electrode materials prepared in Examples 1, 3 and 4 and Comparative Examples 1 to 3 of the present invention.
FIG. 11 is a set of graphs showing the capacity retention rates of the Prussian blue positive electrode materials prepared in Examples 1, 3 and 4 and Comparative Examples 1 to 3 of the present invention.

### [Modes of the Invention]

Hereinafter, although exemplary embodiments of the present invention and the properties of each component are described in detail, they are merely provided to describe the present invention in such detail that it can be carried out by one of ordinary skill in the art to which the present invention belongs.

A method of preparing a Prussian blue positive electrode material for a sodium battery using a Taylor reactor according to the present invention includes a first mixture preparation step (S101) for preparing a first mixture in which an aqueous solution of iron chloride is mixed, a second mixture preparation step (S101-1) for preparing a second mixture in which an aqueous solution of sodium ferrocyanide is mixed, a synthesis step (S103) for synthesizing a Prussian blue analog by reacting the mixture prepared in the second mixture preparation step (S101-1) with the mixture prepared in the first mixture preparation step (S101) in a Taylor reactor under a nitrogen injection condition, a maturation step (S105) for maturing the Prussian blue analog synthesized in the synthesis step (S103), a washing and filtering step (S107) for washing and filtering the Prussian blue analog matured through the maturation step (S105) using a washing agent, and a drying step (S109) for drying the Prussian blue analog washed and filtered through the washing and filtering step (S107).

The first mixture preparation step (S101) is a step for preparing a first mixture in which an aqueous solution of iron chloride (FeCl₂.4H₂O) is mixed, preferably, a step for preparing a first mixture by mixing trisodium citrate and an aqueous solution of iron chloride, and more preferably, a step for preparing a first mixture by mixing a 0.001 to 6M aqueous solution of iron chloride containing distilled water purged with nitrogen with 0.001 to 4M trisodium citrate and stirring the resulting mixture at a speed of 800 to 900 rpm.

Here, the distilled water purged with nitrogen is more preferably prepared by injecting nitrogen into distilled water at a rate of 18 to 22 cc/min.

The second mixture preparation step (S101-1) is a step for preparing a second mixture in which an aqueous solution of sodium ferrocyanide (Na₄Fe(CN)₆.10H₂O) is mixed, preferably, a step for preparing a second mixture by mixing trisodium citrate and an aqueous solution of sodium ferrocyanide containing distilled water purged with nitrogen, and more preferably, a step for preparing a second mixture by mixing a 0.001 to 1M aqueous solution of sodium ferrocyanide containing distilled water purged with nitrogen with 0.001 to 4M trisodium citrate and stirring the resulting mixture at a speed of 800 to 900 rpm.

Here, the distilled water purged with nitrogen is more preferably prepared by injecting nitrogen into distilled water at a rate of 18 to 22 cc/min.

The synthesis step (S103) is a step of synthesizing a Prussian blue analog by inputting the mixture prepared in the first mixture preparation step (S101) and the mixture prepared in the second mixture preparation step (S101-1) into a Taylor reactor and reacting the resulting mixture under a nitrogen injection condition, and more preferably, performed by inputting 100 parts by weight of the mixture prepared in the first mixture preparation step (S101) and 80 to 120 parts by weight of the mixture prepared in the second mixture preparation step (S101-1) into a Taylor reactor and stirring the resulting mixture at 10 to 100 °C and a speed of 50 to 1500 rpm for 10 to 1200 minutes.

A Prussian blue analog is synthesized through the synthesis step (S103), and here, the nitrogen injection is more preferably performed under the condition of 18 to 22cc/min.

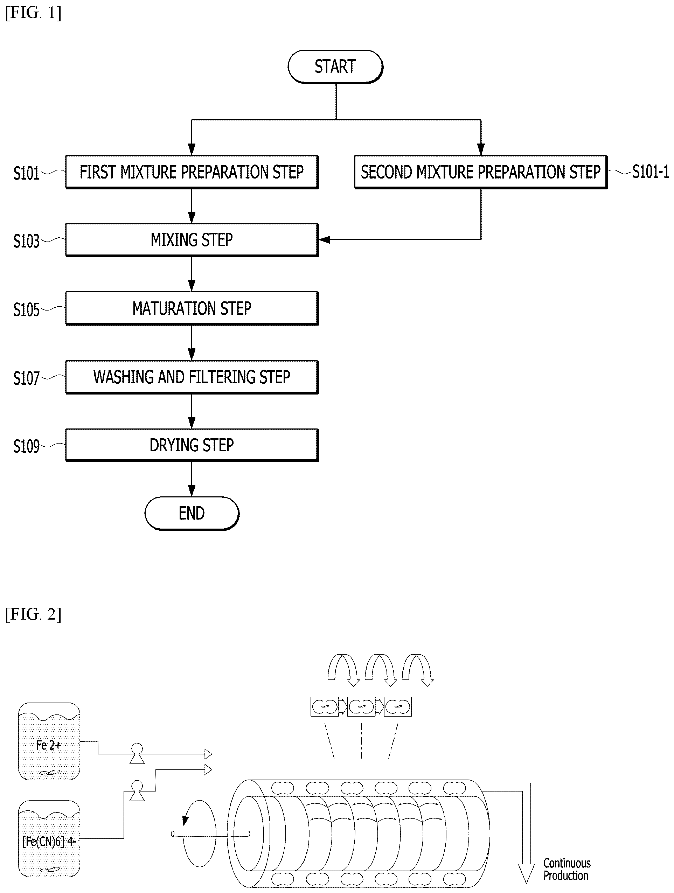

The reaction of the Prussian blue analog performed in the synthesis step (S101) is performed by co-precipitation, and the reaction of the Prussian blue analog performed by co-precipitation is shown in Reaction Scheme 1 below and FIG. 2.

<Reaction Scheme 1> [Fe(CN)₆⁴⁻]→[Fe(CN)₆⁴⁻]+Fe²⁺+[CN]-xNA+Fe(CN)₆⁴⁻+Fe²⁺³⁺→NaxFe[Fe(CN)₆]

As shown in Reaction Scheme 1 in the synthesis step of the present invention, the final product, the Prussian blue analog (NaxFe₂(CN)₆), is synthesized as the final product by reacting the first mixture containing iron ions and the second mixture containing ferrocyanide.

Co-precipitation refers to a phenomenon of precipitating a material along with another material when precipitating, and a method in which other various ions in an aqueous or nonaqueous solution are precipitated together, and it also refers to the most commonly used method for preparing precursors.

The maturation step (S105) is a step of maturing the Prussian blue analog synthesized through the synthesis step (S103), which is preferably carried out by wrapping the Prussian blue analog synthesized in the synthesis step (S103) with parafilm at room temperature without stirring or heating and maturing the resulting product in a desiccator for 22 to 26 hours.

When the maturation step (S105) performed through the above-described process, the performance of the synthesized Prussian blue positive electrode material may be improved.

The washing and filtration step (S107) is a step of washing and filtering the Prussian blue analog matured through the maturation step (S105) using a washing agent, and is preferably performed by washing 100 parts by weight of the Prussian blue analog matured through the maturation step (S105) with 650 to 700 parts by weight of a washing agent two or three times.

Here, the washing agent is preferably prepared by mixing 1 to 1.5 parts by weight of trisodium citrate with 100 parts by weight of distilled water, and after washing is completed, it is preferable to carry out a filtering process using a centrifuge or continuous centrifuge and an SS filtering device.

The drying step (S109) is a step of drying the Prussian blue analog washed and filtered through the washing and filtering step (S107), and is preferably performed by drying the Prussian blue analog washed and filtered through the washing and filtering step (S107) at 40 to 130 °C for 10 to 30 hours.

Here, the device used in drying is not particularly limited, and may be a vacuum oven or continuous dryer. For small-quantity drying, it is efficient to use a vacuum oven, and for large-quantity drying, it is desirable to use a continuous dryer.

Hereinafter, a method of preparing a Prussian blue positive electrode material for a sodium battery using a Taylor reactor according to the present invention and the properties of a Prussian blue positive electrode material for a sodium battery, prepared by the preparation method, will be described with reference to examples.

### <Preparation Example 1> Preparation of first mixture

A first mixture was prepared by mixing 2M trisodium citrate with a 3M aqueous solution of iron chloride containing distilled water purged with nitrogen (20 cc/min), and stirring the resulting mixture at a speed of 850 rpm.

### <Preparation Example 2> Preparation of second mixture

A second mixture was prepared by mixing 2M trisodium citrate with a 0.5M aqueous solution of sodium ferrocyanide containing distilled water purged with nitrogen (20 cc/min), and stirring the resulting mixture at a speed of 850 rpm.

### <Comparative Preparation Example 1> Preparation of second mixture

A second mixture was prepared by mixing 2M trisodium citrate with a 0.5M aqueous solution of sodium ferrocyanide and stirring the resulting mixture at 850 rpm.

### <Example 1>

A Prussian blue positive electrode material for a sodium battery was prepared by synthesizing a Prussian blue analog by inputting 100 parts by weight of the second mixture prepared in Preparation Example 2 and 100 parts by weight of the first mixture prepared in Preparation Example 1 in a Taylor reactor and stirring them under a nitrogen purging condition (20 cc/min) at 80 °C and 600 rpm for a residence time of 1τ maturing the synthesized Prussian blue analog in a desiccator for 24 hours while the analog is wrapped with parafilm, washing the mature Prussian blue analog with a washing agent twice, filtering the washed Prussian blue analog through centrifugation in a centrifuge at 8500 rpm for 5 minutes, and drying the filtered Prussian blue analog in a vacuum oven at 120 °C for 24 hours.

### <Example 2>

A Prussian blue positive electrode material for a sodium battery was prepared in the same manner as in Example 1, except that a residence time was 4τ.

### <Example 3>

A Prussian blue positive electrode material for a sodium battery was prepared in the same manner as in Example 1, except that a residence time was 5τ.

### <Example 4>

A Prussian blue positive electrode material for a sodium battery was prepared in the same manner as in Example 1, except that a residence time was 6τ.

### <Comparative Example 1>

A Prussian blue positive electrode material for a sodium battery was prepared by synthesizing a Prussian blue analog by inputting 100 parts by weight of the second mixture prepared in Comparative Preparation Example 1 and 100 parts by weight of the first mixture prepared in Preparation Example 1 in a reaction tank and reacting the resulting mixture under a nitrogen purging condition (20 cc/min) at 80 °C and 850 rpm for 1 hour, maturing the synthesized Prussian blue analog in a desiccator for 24 hours while the analog is wrapped with parafilm, washing the mature Prussian blue analog with a washing agent twice, filtering the washed Prussian blue analog through centrifugation in a centrifuge at 8500 rpm for 5 minutes, and drying the filtered Prussian blue analog in a vacuum oven at 120 °C for 24 hours.

### <Comparative Example 2>

A Prussian blue positive electrode material for a sodium battery was prepared in the same manner as in Comparative Example 1, except that the reaction was carried out in a reaction tank for 4 hours.

### <Comparative Example 3>

A Prussian blue positive electrode material for a sodium battery was prepared in the same manner as in Comparative Example 1, except that the reaction was carried out in a reaction tank for 8 hours.

### <Comparative Example 4>

A Prussian blue positive electrode material for a sodium battery was prepared in the same manner as in Comparative Example 1, except that the reaction was carried out in a reaction tank for 15 hours.

The amounts of the Prussian blue positive electrode materials prepared in Examples 2 to 4 were measured and are shown in Table 1 below, and the amounts of the Prussian blue positive electrode materials prepared in Comparative Examples 1 to 4 were measured and are shown in Table 2 below.

(However, in the case of the Taylor reactor experiment, sampling was conducted because it was judged that samples had stabilized after 4τ due to their characteristics.)

**[Table 1]**

| Classification | When 1L was dried (g) |
|---|---|
| Example 2 | 7.07 |
| Example 3 | 7.5 |
| Example 4 | 6.33 |

**[Table 2]**

| Classification | When 1L was dried (g) |
|---|---|
| Comparative Example 1 | 5.125 |
| Comparative Example 2 | 4.425 |
| Comparative Example 3 | 3.85 |
| Comparative Example 4 | 4.9 |

As shown in Tables 1 and 2, it can be seen that the Prussian blue positive electrode materials prepared in Examples 2 to 4 of the present invention showed a yield that is 1.2 to 1.95 times that of the Prussian blue positive electrode materials prepared in Comparative Examples 1 to 4.

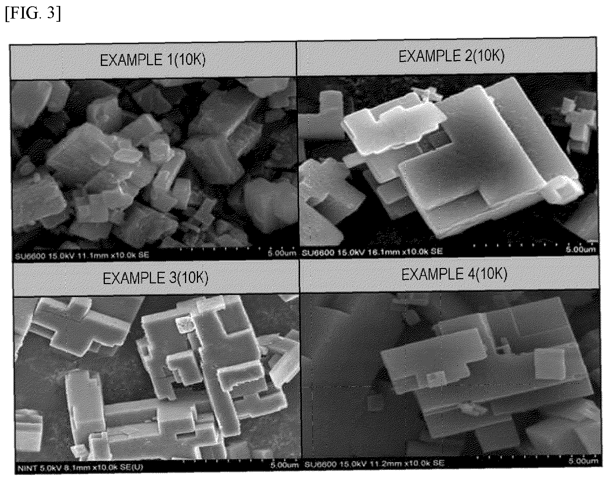

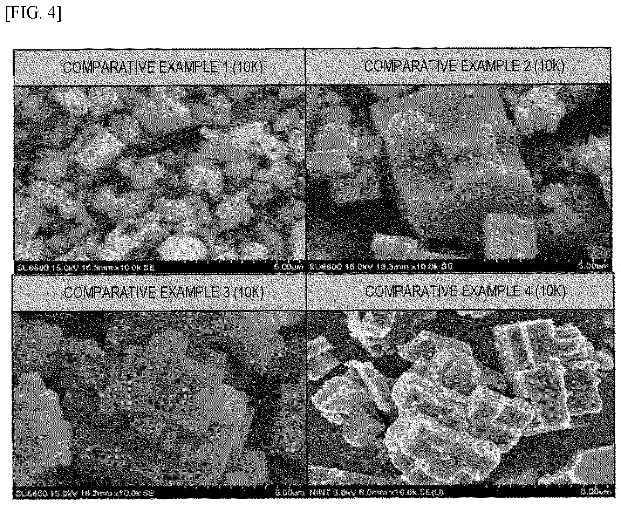

In addition, the Prussian blue positive electrode materials prepared in Examples 1 to 4 were photographed by SEM, which is shown in FIG. 3, and the Prussian blue positive electrode materials prepared in Comparative Examples 1 to 4 were photographed by SEM, which is shown in FIG. 4.

As shown in FIGS. 3 and 4, since the Prussian blue positive electrode materials prepared in Examples 1 to 4 of the present invention enter a steady state, it can be seen that the surface of particles become cleaner compared to the Prussian blue positive electrode materials prepared in Comparative Examples 1 to 4.

On the other hand, it can be seen that the surface of particles of the Prussian blue positive electrode materials prepared in Comparative Examples 1 to 4 becomes smoother as the reaction time increases.

In addition, the average particle sizes of the Prussian blue positive electrode materials prepared in Examples 1 to 4 and Comparative Examples 1 to 4 were measured and are shown in Table 3 below.

**[Table 3]**

| Classification | Example 1 | Example 2 | Example 3 | Example 4 | Comparative Example 1 | Comparative Example 2 | Comparative Example 3 | Comparative Example 4 |
|---|---|---|---|---|---|---|---|---|
| Average particle size (µm) | 1~2 | 2~5 | 3.5~6 | 5.5~8.5 | 1~1.7 | 2~4 | 3~5 | 2~6 |

As shown in Table 3, in all of Examples 1 to 4 and Comparative Examples 1 to 4 of the present invention, it can be seen that, as the reaction time or residence time (τ) increases, the particle size also increases, and the particle sizes of the Prussian blue positive electrode materials prepared in Examples 1 to 4 are larger.

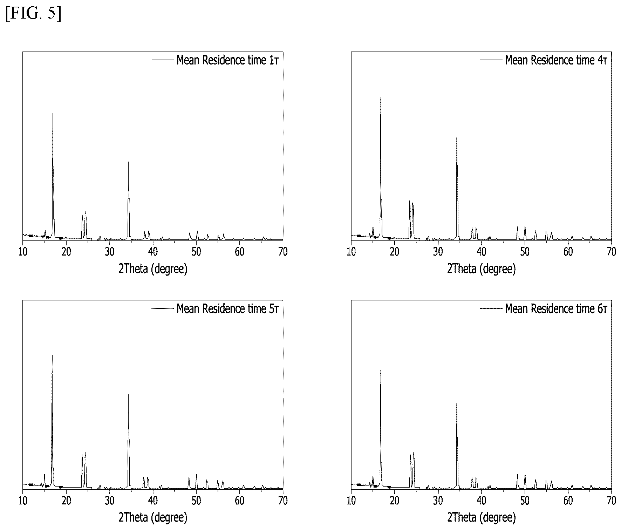

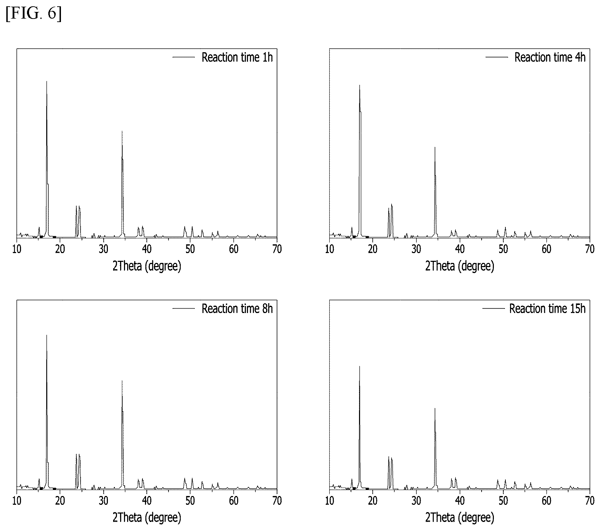

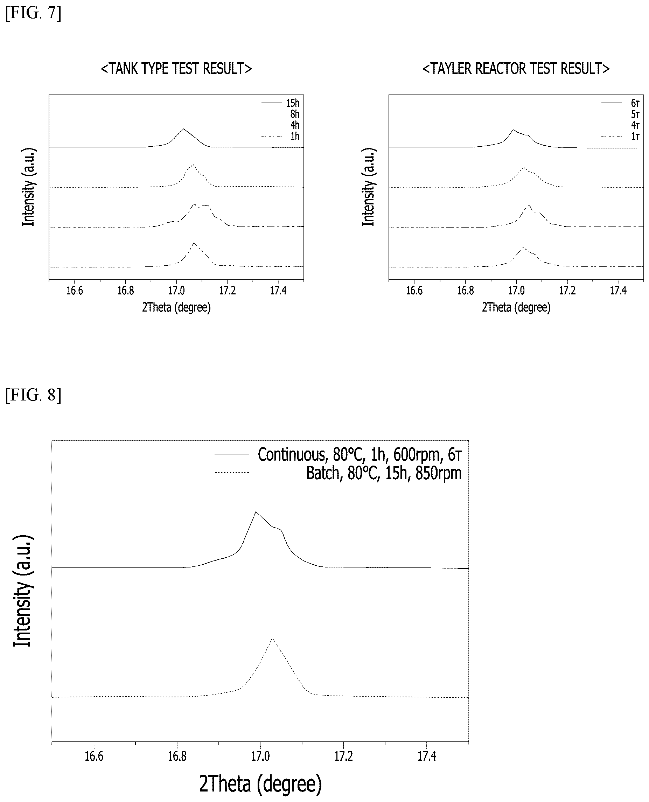

In addition, the XRD patterns of the Prussian blue positive electrode materials prepared in Examples 1 to 4 are shown in FIG. 5, the XRD patterns of the Prussian blue positive electrode materials prepared in Comparative Examples 1 to 4 were measured and are shown in FIG. 6, and the comparison between the XRD patterns of the Prussian blue positive electrode materials prepared in Examples 1 to 4 and Comparative Examples 1 to 4 is shown in FIG. 7.

As shown in FIGS. 5 and 6, looking at the XRD results around 25, 40, 50, and 55 degrees, it can be seen that there are double peaks, indicating high sodium content. According to research results that a higher sodium content results in a favorable effect on the performance and capacity of a battery, it can be seen that a powder containing a higher sodium content has better quality.

In addition, as shown in FIG. 7 below, according to research results that the XRD peak around 17 degrees shifts to the left because the lattice spacing in the structure increases with an increasing sodium content, when comparing Comparative Example 1 (1h) and Comparative Example 2 (4h), it can be seen that the XRD peaks shift to the right, and then shift to the left as the reaction time gradually increases.

On the other hand, comparing Example 1 (1τ) and Example 2 (4τ), it can be seen that the XRD peaks shift to the right, and then shift to the left when reaching a stable state.

In addition, the XRD patterns of the Prussian blue positive electrode materials prepared in Example 4 and Comparative Example 4 were measured and are shown in FIG. 8.

As shown in FIG. 8, it can be seen that the XRD results of the Prussian blue positive electrode material prepared in Example 4 shift slightly more to the left, indicating better quality.

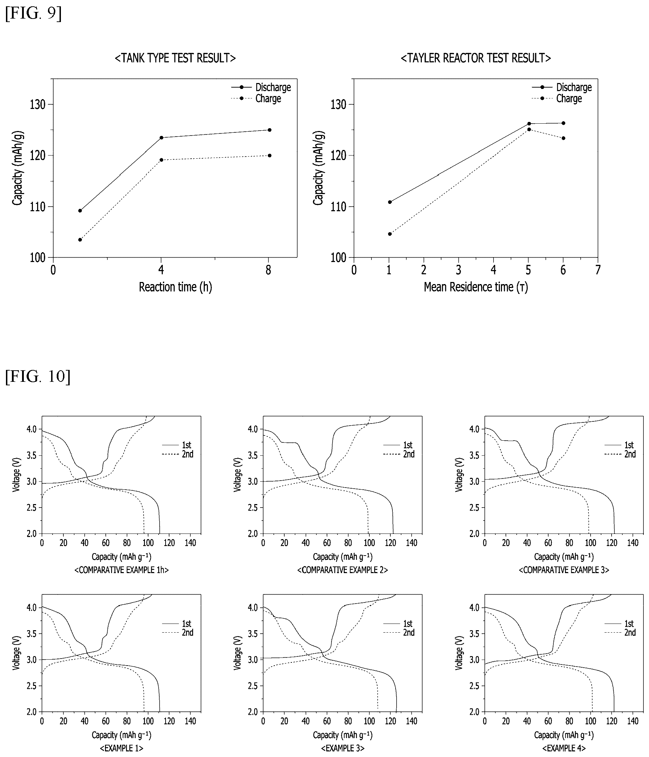

In addition, the charge/discharge capacities of the Prussian blue positive electrode materials prepared in Examples 1, 3 and 4 and Comparative Examples 1 to 3 were measured and are shown in Table 4 below and FIG. 9.

**[Table 4]**

| Classification | D icharge capacity | Charge capac ity | Classification | Dicharge capacity | Charge capac ity |
|---|---|---|---|---|---|
| Example 1 | 11 | 104.5 | Comparative Example 1 | 10 | 103.6 |
| | 1 | | | 9.3 | |
| Example 3 | 12 | 1 2 5 2 | Comparative Example 2 | 12 | 1 1 9 1 3 |
| | 6.1 | | | 3.4 | |
| | | | | 9 | |
| Example 4 | 12 | 1 2 3 3 | Comparative Example 3 | 12 | 1 2 0 |
| | 6.3 | | | 5 | |

As shown in Table 4 and FIG. 9, it can be seen that, in the case of Comparative Examples, the charge/discharge capacity increases as the reaction time (h) increases, and in the case of Examples, as the residence time (τ) increases, the charge/discharge capacity increases, is stabilized and then is maintained.

In addition, the results of the charge/discharge capacity test of the Prussian blue positive electrode materials prepared in Examples 3 and 4 and Comparative Examples 1 to 3 are shown in FIG. 10.

As shown in FIG. 10, the results of Comparative Example 3 and Example 4 appear to be almost the same, indicating that the time of Example 4 of the present invention using a Taylor reactor is further reduced.

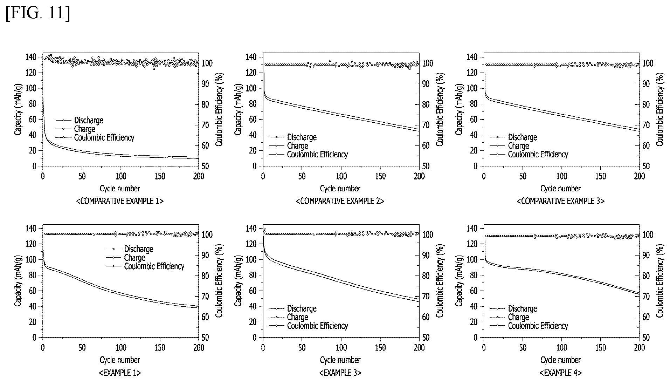

In addition, the capacity retention rates of the Prussian blue positive electrode materials prepared in Examples 3 and 4 and Comparative Examples 1 to 3 were measured and are shown in Table 5 below and FIG. 11.

(However, the capacity retention rates were determined by comparing the trends of Coulombic efficiency (200 cycles).)

**[Table 5]**

| Classification | Coulombic efficiency | Classification | Coulombic efficiency |
|---|---|---|---|
| Example 1 | 65% | Comparative Example 1 | 54% |
| Example 3 | 69% | Comparative Example 2 | 67% |
| Example 4 | 73% | Comparative Example 3 | 68% |

As shown in Table 5 and FIG. 11, in all of Examples and Comparative Examples, it can be seen that the capacity retention rates are improved with an increased reaction time (h) and residence time (τ), and compared to Comparative Examples 1 to 3, Examples 1, 3 and 4 have a shorter reaction time and a capacity retention rate.

Therefore, the method of preparing a Prussian blue positive electrode material for a sodium battery using a Taylor reactor according to the present invention exhibits excellent Prussian blue positive electrode material production efficiency and provides a Prussian blue positive electrode material which can be used to produce a sodium battery with improved charge/discharge efficiency and an improved capacity retention rate.

### [Explanation of reference numerals]

S101 : First mixture preparation step, S101-1 : Second mixture preparation step
S103 : Synthesis step
S105 : Maturation step
S107 : Washing and filtering step
S109 : Drying step

## Claims

1. A method of preparing a Prussian blue positive electrode material for a sodium battery using a Taylor reactor, comprising:
a first mixture preparation step for preparing a first mixture in which an aqueous solution of iron chloride is mixed;
a second mixture preparation step for preparing a second mixture in which an aqueous solution of sodium ferrocyanide is mixed;
a synthesis step for synthesizing a Prussian blue analog by reacting the mixture prepared in the second mixture preparation step with the mixture prepared in the first mixture preparation step in a Taylor reactor under a nitrogen injection condition;
a maturation step for maturing the Prussian blue analog synthesized in the synthesis step
a washing and filtering step for washing and filtering the Prussian blue analog matured through the maturation step using a washing agent; and
a drying step for drying the Prussian blue analog washed and filtered through the washing and filtering step.

2. The method of claim 1, wherein the first mixture preparation step is performed by mixing a 0.001 to 6M aqueous solution of iron chloride containing distilled water purged with nitrogen with 0.001 to 4M trisodium citrate.

3. The method of claim 1, wherein the second mixture preparation step is performed by mixing a 0.001 to 1M aqueous solution of sodium ferrocyanide containing distilled water purged with nitrogen with 0.001 to 4M trisodium citrate.

4. The method of claim 1, wherein the synthesis step is performed by inputting 100 parts by weight of the mixture prepared in the first mixture preparation step and 80 to 120 parts by weight of the mixture prepared in the second mixture preparation step into a Taylor reactor and stirring the resulting mixture at 10 to 100 °C and a speed of 50 to 1500 rpm for 1 to 1440 minutes.

5. The method of claim 1, wherein the drying step is performed at 40 to 130 °C for 10 to 30 hours.

## Patentansprüche

1. Verfahren zum Herstellen eines Preußischblau-positive-Elektrode-Materials für eine Natriumbatterie unter Verwendung eines Taylor-Reaktors, aufweisend:
einen ersten Mischungsherstellungsschritt zum Herstellen einer ersten Mischung, bei dem eine wässrige Eisenchloridlösung gemischt wird;
einen zweiten Mischungsherstellungsschritt zum Herstellen einer zweiten Mischung, bei dem eine wässrige Natriumferrocyanidlösung gemischt wird;
einen Syntheseschritt zum Synthetisieren eines Preußischblau-Analogons durch Reagieren-Lassen der im zweiten Mischungsherstellungsschritt hergestellten Mischung mit der im ersten Mischungsherstellungsschritt hergestellten Mischung in einem Taylor-Reaktor unter einer Stickstoffinjektionsbedingung;
einen Reifungsschritt zum Reifen des im Syntheseschritt synthetisierten Preußischblau-Analogons;
einen Wasch- und Filterschritt zum Waschen und Filtern des durch den Reifungsschritt gereiften Preußischblau-Analogons unter Verwendung eines Waschmittels; und
einen Trocknungsschritt zum Trocknen des durch den Wasch- und Filterschritt gewaschenen und gefilterten Preußischblau-Analogons.

2. Verfahren gemäß Anspruch 1, wobei der erste Mischungsherstellungsschritt durchgeführt wird durch Mischen einer 0,001 bis 6 M wässrigen Eisenchloridlösung, die mit Stickstoff gespültes destilliertes Wasser enthält, mit 0,001 bis 4 M Trinatriumcitrat.

3. Verfahren gemäß Anspruch 1, wobei der zweite Mischungsherstellungsschritt durchgeführt wird durch Mischen einer 0,001 bis 1 M wässrigen Natriumferrocyanid-Lösung, die mit Stickstoff gespültes destilliertes Wasser enthält, mit 0,001 bis 4 M Trinatriumcitrat.

4. Verfahren gemäß Anspruch 1, wobei der Syntheseschritt durchgeführt wird durch Einbringen von 100 Gewichtsteilen der im ersten Mischungsherstellungsschritt hergestellten Mischung und 80 bis 120 Gewichtsteilen der im zweiten Mischungsherstellungsschritt hergestellten Mischung in einen Taylor-Reaktor und Rühren der resultierenden Mischung bei 10 bis 100 °C und einer Drehzahl von 50 bis 1500 U/min für 1 bis 1440 Minuten.

5. Verfahren gemäß Anspruch 1, wobei der Trocknungsschritt bei 40 bis 130 °C für 10 bis 30 Stunden durchgeführt wird.

## Revendications

1. Procédé de préparation d'un matériau d'électrode positive bleu de Prusse pour une batterie au sodium en utilisant un réacteur de Taylor, comprenant :
une première étape de préparation de mélange pour préparer un premier mélange dans laquelle est mélangée une solution aqueuse de chlorure de fer ;
une deuxième étape de préparation de mélange pour préparer un deuxième mélange dans laquelle est mélangée une solution aqueuse de ferrocyanure de sodium ;
une étape de synthèse pour synthétiser un analogue de bleu de Prusse en faisant réagir le mélange préparé lors de la deuxième étape de préparation de mélange avec le mélange préparé lors de la première étape de préparation de mélange dans un réacteur de Taylor dans des conditions d'injection d'azote ;
une étape de maturation pour faire mûrir l'analogue de bleu de Prusse synthétisé lors de l'étape de synthèse ;
une étape de lavage et de filtration pour laver et filtrer l'analogue de bleu de Prusse ayant subi la maturation lors de l'étape de maturation en utilisant un agent de lavage ; et
une étape de séchage pour sécher l'analogue de bleu de Prusse lavé et filtré lors de l'étape de lavage et de filtration.

2. Procédé selon la revendication 1, dans lequel la première étape de préparation de mélange est réalisée en mélangeant une solution aqueuse de chlorure de fer de 0,001 à 6 M, contenant de l'eau distillée purgée à l'azote, avec du citrate trisodique de 0,001 à 4 M.

3. Procédé selon la revendication 1, dans lequel la deuxième étape de préparation de mélange est réalisée en mélangeant une solution aqueuse de ferrocyanure de sodium de 0,001 à 1 M, contenant de l'eau distillée purgée à l'azote, avec du citrate trisodique de 0,001 à 4 M.

4. Procédé selon la revendication 1, dans lequel l'étape de synthèse est réalisée en introduisant 100 parties en poids du mélange préparé lors de la première étape de préparation de mélange et 80 à 120 parties en poids du mélange préparé lors de la deuxième étape de préparation de mélange dans un réacteur de Taylor, puis en agitant le mélange obtenu à 10 à 100 °C et à une vitesse de 50 à 1 500 tr/min pendant 1 à 1440 minutes.

5. Procédé selon la revendication 1, dans lequel l'étape de séchage est réalisée à 40 à 130 °C pendant 10 à 30 heures.
